# EUROPEAN PATENT APPLICATION

(11) **EP 4 385 891 A1**
(43) Date of publication of application: **19.06.2024**
(21) Application number: 23215293.4
(22) Date of filing: 08.12.2023
(51) Int. Cl.: B64C 23/06, B64D 47/00, B64C 1/36

(54) **AIRCRAFT WINGTIP ANTENNA/SENSOR MOUNT**

(30) Priority: 16.12.2022 GB 202219056
(71) Applicant: Raytheon Systems Limited, Essex CM17 9NA (GB)
(72) Inventor: BARON, Laurence, Harlow, CM17 9NA (GB)
(74) Representative: Dentons UK and Middle East LLP

(57) **Abstract**

A first embodiment of a hollow wingtip device (200) that can be selectively releasably connected to the wing (140) of an aircraft is described herein. An interior of the hollow wingtip device (200) comprises a compartment (250). A second embodiment of a hollow wingtip device (300) is described comprising a compartment (350) in an interior of the hollow wingtip device (300), an opening (360) configured to provide access to the compartment (350) and a cover (370) for covering the opening (360). An aircraft comprising the hollow wingtip devices (200), a wing (140), and electrical equipment (290) is also provided. Methods for providing a hollow wingtip device (200), and methods for installing electrical equipment (290) on aircraft are also described.

## Description

### TECHNICAL FIELD

Aircraft have aerodynamic wingtips to improve wing performance, increase lift and reduce drag. The wingtip devices are normally composite structures and typically have strobe lights attached externally. Antennae and/or sensors are typically mounted on the upper fuselage of the aircraft.

### BACKGROUND OF THE INVENTION

Small aircraft have limitations on where electrical equipment, such as antennae and/or sensors, can be mounted. There is a need to identify additional places on aircraft for storing electrical equipment. For certain aircraft, there is a requirement for the location where this equipment is mounted to be discrete so that it may not be easily located by an observer. A further requirement is that the aircraft must be optimised in terms of mass, speed and aerodynamics; it is sometimes undesirable to add additional housing for antennae and/or sensors to the often crowded upper fuselage.

### SUMMARY

The present invention solves this problem by providing a modified hollow wingtip device comprising a compartment in which electrical equipment can be stored. The wingtip device, such as a winglet, may be used to store antenna and/or sensors inside the compartment. Repurposing the wingtip device to be used for both improving wing performance and housing electrical equipment allows for previously unused space to be utilised, and for the antennae and/or sensors to have an unobstructed view which is more readily achieved when the antennae and/or sensors are mounted at the end of the wing. Moreover, storing antennae and/or sensor in the wingtip device allows for the installation to be discrete.

In particular, in a first embodiment the present invention provides a hollow wingtip device for an aircraft as recited in claim 1 and its dependent claims. In the invention, an interior of the hollow wingtip device defines a compartment, and the hollow wingtip device is configured to be selectively releasably connected to a wing of the aircraft. The hollow wingtip device being selectively releasably connected to the aircraft means that the hollow wingtip device can be removed from the aircraft and the same hollow wingtip device can be reinstalled on the aircraft. In this process, neither the hollow wingtip device, nor the aircraft is damaged by the hollow wingtip device being removed from the aircraft and then reinstalled on the aircraft. First fastening means for selectively releasably connecting the hollow wingtip device to the wing of the aircraft may be provided. The first fastening means may be a removable rivet. Advantageously, providing a compartment in a hollow wingtip device allows for the wingtip to be used for storing electrical equipment, such as antennae and/or sensors. Selectively releasably connecting the hollow wingtip device to the wing of the aircraft allows for the wingtip device to be removed so that the electrical equipment can be maintained.

A weatherproof seal may be present between the hollow wingtip device and the wing of the aircraft. A weatherproof seal prevents any electrical equipment stored in the aircraft from being exposed to high altitude weather conditions.

The hollow wingtip device described herein may not be transmissive to electromagnetic radiation in the visible range. The resulting advantage is that an observer would not be able to see through the hollow wingtip device if they were looking for antenna and/or sensor on the aircraft. Therefore, the installation can be covert and discrete.

The hollow wingtip device may be made of a radome material. The radome material may be wideband. The hollow wingtip device may be transmissive to radiofrequency electromagnetic radiation. Any electrical equipment stored inside the hollow wingtip device could therefore transmit and receive signals while being stored in the hollow wingtip device. The hollow wingtip device can also protect the electrical equipment from high altitude weather conditions.

The hollow wingtip device may comprise at least one divider in the compartment, which may or may not be transmissive to radiofrequency electromagnetic radiation. The hollow wingtip device may also comprise at least one stringer and/or at least one frame, which may be or may not be transmissive to radiofrequency electromagnetic radiation. The at least one divider, at least one stringer and/or at least one frame may provide structure to the hollow wingtip device and may not disrupt any signals sent and received by any electrical equipment positioned inside the hollow wingtip device.

The hollow wingtip device may comprise mounting equipment positioned inside the compartment, wherein the mounting equipment is for mounting electrical equipment. The mounting equipment may include fittings such as brackets, nuts and bolts, for example. The electrical equipment may be an antenna and/or a sensor.

The present invention also provides a second embodiment of a hollow wingtip device for an aircraft as recited in claim 3 and its dependent claims. The second embodiment of the hollow wingtip device comprises a compartment in an interior of the hollow wingtip device, an opening configured to provide access to the compartment and a cover for covering the opening. Advantageously, providing a compartment in a hollow wingtip device allows for the wingtip to be used for storing electrical equipment, such as antennae and/or sensors. The opening and cover that provide selective access to the compartment allow for the hollow wingtip device to be used to store electrical equipment. The electrical equipment can be accessed through the opening and cover so that the electrical equipment can be maintained.

A weatherproof seal may be present between the hollow wingtip device and the wing of the aircraft. A weatherproof seal prevents any electrical equipment stored in the aircraft from being exposed to high altitude weather conditions.

The hollow wingtip device described herein may not be transmissive to electromagnetic radiation in the visible range. The resulting advantage is that an observer would not be able to see through the hollow wingtip device if they were looking for antenna and/or sensor on the aircraft. Therefore, the installation can be covert and discrete.

The hollow wingtip device may be made of a radome material. The radome material may be wideband. The hollow wingtip device may be transmissive to radiofrequency electromagnetic radiation. Any electrical equipment stored inside the hollow wingtip device could therefore transmit and receive signals while being stored in the hollow wingtip device. The hollow wingtip device can also protect the electrical equipment from high altitude weather conditions.

The hollow wingtip device may comprise at least one divider in the compartment, which may or may not be transmissive to radiofrequency electromagnetic radiation. The hollow wingtip device may also comprise at least one stringer and/or at least one frame, which may be or may not be transmissive to radiofrequency electromagnetic radiation. The at least one divider, at least one stringer and/or at least one frame may provide structure to the hollow wingtip device, and may not disrupt any signals sent and received by any electrical equipment positioned inside the hollow wingtip device.

The hollow wingtip device may comprise mounting equipment positioned inside the compartment, wherein the mounting equipment is for mounting electrical equipment. The mounting equipment may include fittings such as brackets, nuts and bolts, for example. The electrical equipment may be an antenna and/or a sensor.

The present invention also provides an aircraft as recited in claim 16 and its dependent claims. The aircraft comprises a wing, the hollow wingtip device of the first embodiment or the hollow wingtip device of the second embodiment releasably connected to the wing, and electrical equipment positioned inside the compartment of the hollow wingtip device. The aircraft may comprise a conduit configured to be connected to the electrical equipment, wherein the conduit provides a connection between the compartment and an interior of the aircraft. The conduit may already be installed on the aircraft. The electrical equipment positioned inside the compartment of the hollow dorsal fin may piggyback on the preinstalled conduit. This may allow for electrical equipment positioned inside the compartment to be connected to a power supply in an interior of the aircraft. The electrical equipment may be an antenna and/or a sensor.

The present invention also provides a method for providing a wingtip device on an aircraft as recited in claim 12 and its dependent claims. The method for providing a wingtip device on an aircraft comprises releasably connecting the hollow wingtip device of the first embodiment or the hollow wingtip device of the second embodiment to the wing of an aircraft. Before the hollow wingtip device is releasably connect to the wing of the aircraft, a fixed wingtip device may be removed from the wing of the aircraft. A fixed wingtip device is one that is not designed to be removed from an aircraft and placed back on an aircraft - the fixed wingtip device, or the aircraft itself, may be damaged in the process of removing the fixed wingtip device so that the fixed wingtip device cannot be reinstalled on the aircraft.

The method may further comprise removing the hollow wingtip device from the wing of the aircraft, installing electrical equipment on the wing of the aircraft, and releasably reconnecting the hollow wingtip device to the wing of the aircraft such that the electrical equipment is within the compartment.

The present invention also provides a method of installing electrical equipment on an aircraft as recited in claim 15 and its dependent claims. The method comprises removing a fixed wingtip device from the wing of an aircraft, providing the hollow wingtip device of the first embodiment or the hollow wingtip device of the second embodiment, installing electrical equipment on the wing of the aircraft and releasably connecting the hollow wingtip device to the wing of the aircraft such that the electrical equipment is within the compartment. A fixed wingtip device is one that is not designed to be removed from an aircraft and placed back on an aircraft - the fixed wingtip device, or the aircraft itself, may be damaged in the process of removing the fixed wingtip device so that the fixed wingtip device cannot be reinstalled on the aircraft.

### BRIEF DESCRIPTION OF THE DRAWINGS

Fig. 1 shows an aircraft comprising a first embodiment of a hollow wingtip device.
Fig. 2 shows the first embodiment of the hollow wingtip device.
Fig. 3 shows a second embodiment of a hollow wingtip device.
Fig. 4 shows a method for providing a hollow wingtip device on an aircraft.

### DETAILED DESCRIPTION

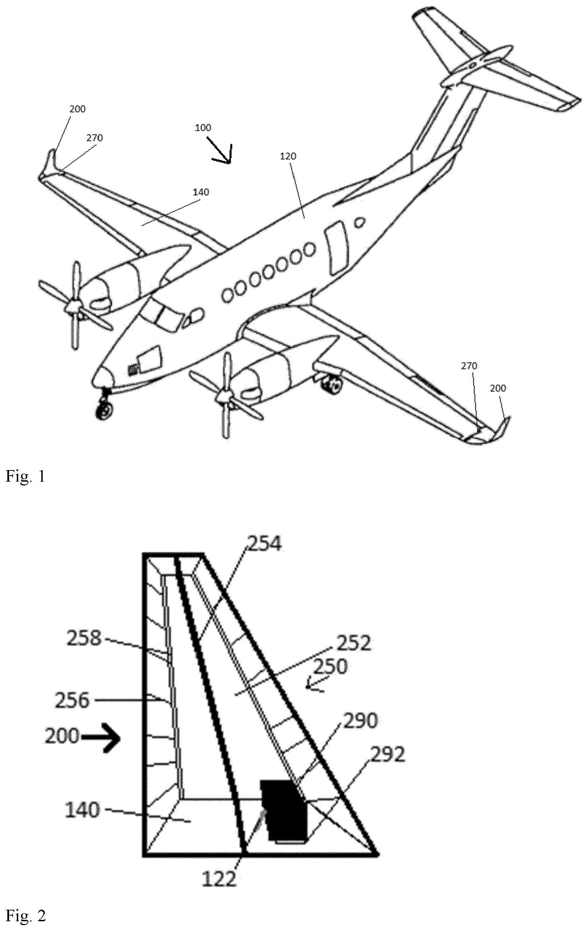

With reference to the figures, Fig. 1 shows an aircraft 100 comprising a wing 140 and a wingtip device 200. The wingtip device 200 is a winglet. The wingtip device 200 is dimensioned according to the specific requirements of the aircraft 100 in order to improve wing performance, increase lift and reduce drag. The hollow wingtip device 200 is configured to be selectively releasably connected to the wing 140. The hollow wingtip device being selectively releasably connectable to the aircraft means that the hollow wingtip device can be removed from the aircraft and the same hollow wingtip device can be reinstalled on the aircraft. In this process, neither the hollow wingtip device, nor the aircraft is damaged by the hollow wingtip device being removed from the aircraft and then reinstalled on the aircraft.

One or more fasteners 270 are employed to releasably connect the hollow wingtip device 200 to the wing 140. The one or more fasteners 270 may be at least one removable rivet, or any other type of removable fastener. A removal tool may be used to remove the removable rivet.

With reference to Fig. 2, the wingtip device 200 is hollow and an interior of the wingtip device defines a compartment 250. The compartment 250 of the hollow wingtip device 200 is dimensioned to contain electrical equipment 290. The compartment of the hollow wingtip device also comprises mounting equipment 292 for installing the electrical equipment 290 on the wing 140 (shown in Fig. 1). The electrical equipment 290 may comprise antennae and/or sensors as well as Line Replaceable Units (LRU's) that cannot be located elsewhere. The antennae and/or sensors can transmit and receive radiation. The radiation may be radiofrequency electromagnetic radiation (RF).

The wing 140 comprises a conduit 122 for connecting the electrical equipment 290 to a power source located in the interior of a fuselage 120 of the aircraft. The conduit 122 may already be installed on the aircraft, such as the conduit used to connect a pre-existing strobe light on a wingtip to a power source. The electrical equipment 290 positioned inside the compartment 250 of the hollow wingtip device 200 may piggyback on the preinstalled conduit.

The hollow wingtip device 200 is removable as described above, which allows for maintenance of the electrical equipment 290. The hollow wingtip device 200 is made of a material that allows the electrical equipment to transmit and receive RF radiation through the hollow wingtip device 200. The material also protects the electrical equipment from weather conditions. The material may be transmissive to RF radiation or non-transmissive to RF radiation and have embedded features or be plain solid. The hollow wingtip device 200 is made of a material that is not transmissive to radiation in the visible range of the electromagnetic spectrum.

The compartment 250 comprises sub-compartments 252. The sub-compartments are divided by at least one divider 254. The at least one divider 254 may or may not be made of a material that is transmissive to RF radiation. For providing structural support to the compartment 250, the compartment 250 also comprises at least one stringer 256 and/or at least one frame 258. The stringer and frame are made of a material that is transmissive to RF radiation.

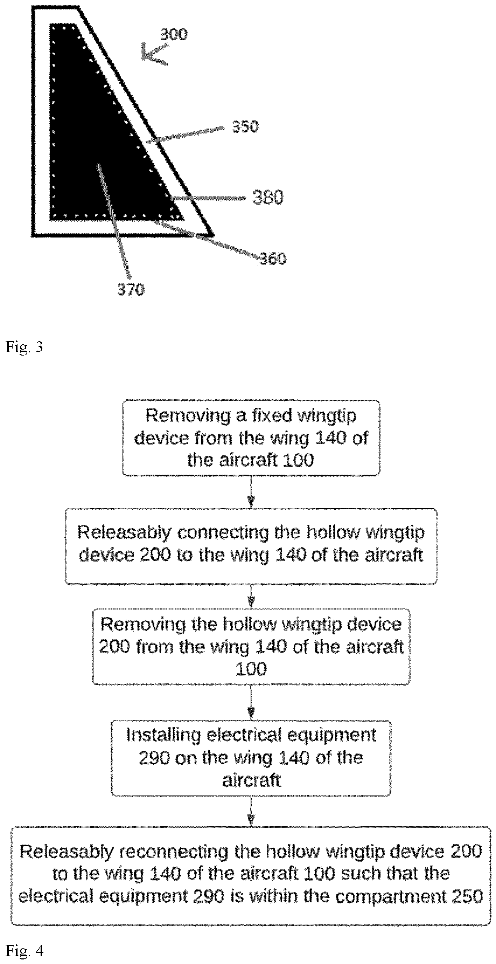

Fig. 3 shows a second embodiment of a hollow wingtip device 300 on wing 140. The hollow wingtip device 300 is similar to hollow wingtip device 200. The interior of hollow wingtip device 300 defines a compartment 350. The hollow wingtip device 300 comprises an opening 360 that allows access to the compartment 350, and a cover 370 to cover the opening 360. Fasteners 380 are provided to removably secure the cover to the opening. The cover may be connected to the opening using a hinge.

The hollow wingtip device 300 may be configured to be fixedly connected to the wing with fasteners. Alternatively, the hollow wingtip device 300 may be configured to be selectively releasably connected to the wing with removable fasteners.

The compartment 350 is dimensioned to store electrical equipment, such as the electrical equipment discussed in the first embodiment. The hollow wingtip device 300 may comprise mounting equipment, such as the mounting equipment discussed in connection with the first embodiment, for installing the electrical equipment on the wing 140. The opening 360 is configured to allow access to the compartment 350 to allow maintenance of the electrical equipment.

The hollow wingtip device 300 is made of a material that allows the electrical equipment to transmit and receive RF radiation through the hollow wingtip device. The material also protects the electrical equipment from weather conditions. The material may be transmissive to RF radiation or non-transmissive to RF radiation and have embedded features or be plain solid. The hollow wingtip device 300 is made of a material that is not transmissive to radiation in the visible range of the electromagnetic spectrum.

The compartment 350 can comprise sub-compartments divided by at least one divider, such as the sub-compartments and at least one divider described in the first embodiment. The at least one divider may or may not be made of a material that is transmissive to RF radiation. For providing structural support to the compartment 350, the compartment 350 can also comprise at least one stringer and/or at least one frame such as the at least one stringer and the at least one frame described in the first embodiment. The at least one stringer and at least one frame can be made of a material that is transmissive to RF radiation.

Fig. 4 shows a method for fitting the hollow wingtip device 200 to an aircraft 100. Securing the hollow wingtip device 200 onto the aircraft includes releasably connecting the hollow wingtip device 200 to the wing using fasteners 270.

The method can be further be adapted for installing the electrical equipment 290 in the compartment 250. The hollow wingtip device 200 is disconnected from the wing 140, and electrical equipment 290 is installed on the wing 140. The electrical equipment is connected to the power source by the conduit 122. The hollow wingtip device 200 is then releasably reconnected to the wing using fasteners 270 such that the electrical equipment 290 is within the compartment. Alternatively, the hollow wingtip device 300 is fixedly secured to the wing using fasteners, or selectively releasably connected to the wing using fasteners 270. To install electrical equipment in the compartment 350, the cover 370 is removed and the opening 360 is accessed so that electrical equipment 290 is installed on the wing 140 and connected to the power source by a conduit, such as the conduit of the first embodiment. The cover 370 is then replaced.

To adapt the method for retrofitting the hollow wingtip device 200, 300 to an aircraft, before the step of securing the hollow wingtip device 200, 300 to the wing 140, there is a step of first removing a fixed wingtip device from the wing 140. A fixed wingtip device is one that is not designed to be removed from an aircraft and placed back on an aircraft - the fixed wingtip device, or the aircraft itself, may be damaged in the process of removing the fixed wingtip device so that the fixed wingtip device cannot be reinstalled on the aircraft.

As has been described herein, methods and systems are provided for maximising the amount of space on aircraft that can be used for storing antennae and/or sensors by repurposing the hollow wingtip device as a compartment in which electrical equipment can be stored. The methods and systems described allow for the sensor installations to be discrete and covert, and allow the antennae and/or sensors to have an unobstructed view.

### EMBODIMENTS

1. A hollow wingtip device for an aircraft, wherein an interior of the hollow wingtip device defines a compartment, and the hollow wingtip device is configured to be selectively releasably connected to a wing of the aircraft.
2. The hollow wingtip device of embodiment 1, further comprising first fastening means for selectively releasably connecting the hollow wingtip device to the wing of the aircraft.
3. The hollow wingtip device of any preceding embodiment, further comprising a seal between the hollow wingtip device and the wing of the aircraft, wherein the seal is weatherproof.
4. A hollow wingtip device for an aircraft, comprising:
   a compartment in an interior of the hollow wingtip device;
   an opening configured to provide access to the compartment; and
   a cover for covering the opening.
5. The hollow wingtip device of any preceding embodiment, wherein the hollow wingtip device is not transmissive to electromagnetic radiation in the visible range.
6. The hollow wingtip device of any preceding embodiment, wherein the hollow wingtip device is a radome.
7. The hollow wingtip device of any preceding embodiment, wherein the hollow wingtip device is transmissive to radiofrequency electromagnetic radiation.
8. The hollow wingtip device of any preceding embodiment, the compartment further comprising one or more of: at least one divider;
   at least one stringer; and
   at least one frame
9. The hollow wingtip device of embodiment 8, wherein the at least one divider, at least one stringer and/or at least one frame is transmissive to radiofrequency electromagnetic radiation.
10. The hollow wingtip device of embodiment 8, wherein the at least one divider is not transmissive to radiofrequency electromagnetic radiation.
11. The hollow wingtip device of any preceding embodiment, wherein the hollow wingtip device comprises mounting equipment positioned inside the compartment, wherein the mounting equipment is for electrical equipment.
12. A method for providing a wingtip device on an aircraft, the method comprising:
   releasably connecting the hollow wingtip device of any of embodiments 1 to 11 to the wing of the aircraft.
13. The method of embodiment 12, further comprising before the step of releasably connecting the hollow wingtip device:
   removing a fixed wingtip device from the wing of the aircraft.
14. The method of embodiment 12 or embodiment 13, further comprising:
   removing the hollow wingtip device from the wing of the aircraft;
   installing electrical equipment on the wing of the aircraft; and
   releasably reconnecting the hollow wingtip device to the wing of the aircraft such that the electrical equipment is within the compartment.
15. A method of installing electrical equipment on an aircraft, the method comprising:
   removing a fixed wingtip device from the wing of the aircraft;
   providing the hollow wingtip device of any of embodiments 1 to 11; installing the electrical equipment on the wing of the aircraft;
      and
   releasably connecting the hollow wingtip device to the wing of the aircraft such that the electrical equipment is within the compartment.
16. An aircraft comprising:
   a wing;
   the hollow wingtip device of any of embodiments 1 to 11, releasably connected to the wing; and electrical equipment positioned inside the compartment.
17. The aircraft of embodiment 16, further comprising a conduit configured to be connected to the electrical equipment, wherein the conduit provides a connection between the compartment and an interior of the aircraft.
18. The hollow wingtip device of embodiment 11 or the method of embodiment 14 or 15 or the aircraft of embodiment 16 or 17, wherein the electrical equipment comprises an antenna and/or a sensor.

## Claims

1. A hollow wingtip device for an aircraft, wherein an interior of the hollow wingtip device defines a compartment, and the hollow wingtip device is configured to be selectively releasably connected to a wing of the aircraft.

2. The hollow wingtip device of claim 1, further comprising first fastening means for selectively releasably connecting the hollow wingtip device to the wing of the aircraft.

3. The hollow wingtip device of any preceding claim, further comprising a seal between the hollow wingtip device and the wing of the aircraft, wherein the seal is weatherproof.

4. A hollow wingtip device for an aircraft, comprising:
a compartment in an interior of the hollow wingtip device;
an opening configured to provide access to the compartment; and
a cover for covering the opening.

5. The hollow wingtip device of any preceding claim, wherein the hollow wingtip device is:
not transmissive to electromagnetic radiation in the visible range; and/or
a radome; and/or
transmissive to radiofrequency electromagnetic radiation.

6. The hollow wingtip device of any preceding claim, the compartment further comprising one or more of:
at least one divider;
at least one stringer; and
at least one frame

7. The hollow wingtip device of claim 6, wherein the at least one divider, at least one stringer and/or at least one frame is transmissive to radiofrequency electromagnetic radiation.

8. The hollow wingtip device of claim 6, wherein the at least one divider is not transmissive to radiofrequency electromagnetic radiation.

9. The hollow wingtip device of any preceding claim, wherein the hollow wingtip device comprises mounting equipment positioned inside the compartment, wherein the mounting equipment is for electrical equipment, optionally, wherein the electrical equipment comprises an antenna and/or a sensor.

10. A method for providing a wingtip device on an aircraft, the method comprising:
releasably connecting the hollow wingtip device of any of claims 1 to 9 to the wing of the aircraft.

11. The method of claim 10, further comprising before the step of releasably connecting the hollow wingtip device:
removing a fixed wingtip device from the wing of the aircraft.

12. The method of claim 10 or claim 11, further comprising:
removing the hollow wingtip device from the wing of the aircraft;
installing electrical equipment on the wing of the aircraft; and
releasably reconnecting the hollow wingtip device to the wing of the aircraft such that the electrical equipment is within the compartment.

13. A method of installing electrical equipment on an aircraft, the method comprising:
removing a fixed wingtip device from the wing of the aircraft;
providing the hollow wingtip device of any of claims 1 to 9;
installing the electrical equipment on the wing of the aircraft; and
releasably connecting the hollow wingtip device to the wing of the aircraft such that the electrical equipment is within the compartment.

14. An aircraft comprising:
a wing;
the hollow wingtip device of any of claims 1 to 9, releasably connected to the wing; and electrical equipment positioned inside the compartment.

15. The aircraft of claim 14, further comprising a conduit configured to be connected to the electrical equipment, wherein the conduit provides a connection between the compartment and an interior of the aircraft.
